# EUROPÄISCHE PATENTANMELDUNG

(11) **EP 3 502 525 A1**
(43) Veröffentlichungstag der Anmeldung: **26.06.2019**
(21) Anmeldenummer: 18212227.5
(22) Anmeldetag: 13.12.2018
(51) Int. Cl.: F16J 15/34

(54) **VERFAHREN ZUM ERMITTELN DER RESTLEBENSDAUER EINER GLEITRINGDICHTUNG**

(30) Priorität: 21.12.2017 DE 102017223560
(71) Anmelder: Christian Maier GmbH & Co. KG Maschinenfabrik, 89520 Heidenheim (DE)
(72) Erfinder: Maier, Florian, 73433 Aalen (DE); Schwenk, Günther, 89520 Heidenheim (DE); Hörger, Lukas, 89522 Heidenheim (DE)
(74) Vertreter: Dr. Weitzel & Partner

(57) **Zusammenfassung**

Die Erfindung betrifft ein Verfahren zum Ermitteln der Restlebensdauer einer Gleitringdichtung mit einem Gleitring und einem Gegenring, wobei der Gleitring und/oder der Gegenring um eine Drehachse relativ zum jeweils anderen Ring umläuft und der Gleitring zur Abdichtung eines Dichtspaltes elastisch vorgespannt am Gegenring anliegt, mit den folgenden Schritten:
- Festlegen eines maximal zulässigen Verschleißzustandes des Gleitringes und/oder des Gegenringes;
- Erfassen der abgelaufenen Betriebszeit;
- Ermitteln eines Ist-Verschleißzustands des Gleitringes und/oder des Gegenringes mittels eines Verschleißsensors;
- Extrapolieren der Restlebensdauer aus der abgelaufenen Betriebszeit, dem Ist-Verschleißzustand und dem maximal zulässigen Verschleißzustand.

## Beschreibung

Die vorliegende Erfindung betrifft ein Verfahren zum Ermitteln der Restlebensdauer einer Gleitringdichtung.

Gleitringdichtungen weisen einen Gleitring und einen Gegenring auf. Der Gleitring rotiert um eine Drehachse relativ zum Gegenring, der beispielsweise stationär ist. Bei anderen Ausführungsformen ist der Gleitring stationäre und der Gegenring läuft um eine Drehachse um. Auch ein Umlaufen beider Ringe mit zumindest zeitweise verschiedenen Drehzahlen kommt in Betracht. Der Gleitring wird elastisch vorgespannt an den Gegenring angedrückt, um einen Dichtspalt möglichst vollständig abzudichten. Aufgrund der Berührung zwischen dem Gleitring und dem Gegenring tritt ein Verschleiß auf, je nach Materialauswahl an dem Gleitring, dem Gegenring oder an beiden Ringen.

Aufgrund des Verschleißes ist die Lebensdauer einer Gleitringdichtung begrenzt und der Gleitring und/oder der Gegenring müssen rechtzeitig ausgetauscht werden, bevor eine unzulässige Undichtigkeit in der Gleitringdichtung auftritt. Es kann jeweils der gesamte Ring oder es können beide Ringe ausgetauscht werden, oder nur Verschleißteile derselben. Der rechtzeitige Austausch ist besonders dann wichtig, wenn mit der Gleitringdichtung ein umweltschädliches Medium gegenüber der Umgebung abgedichtet wird oder bei der Abdichtung eines anderen gefährlichen Mediums, das einen Schaden an umliegenden Bauteilen oder der Umgebung erzeugen kann.

Wenn vorliegend von der Abdichtung eines Mediums mit der Gleitringdichtung die Rede ist, so bezieht sich dies auf eine Abdichtung eines ersten geschlossenen oder offenen Raumes gegenüber einem zweiten geschlossenen oder offenen Raum, wobei der erste Raum das Medium führt oder aufnimmt und die Gleitringdichtung verhindern soll, dass das Medium in den zweiten Raum übertritt, der auch die Umgebung sein kann. In bestimmten Anwendungsfällen kann dabei ein Leckagestrom aus dem ersten Raum in den zweiten Raum zulässig sein, solange er eine vorgegebene Größe nicht überschreitet, es handelt sich bei der Gleitringdichtung demnach nicht zwingend um eine vollständig abdichtende Gleitringdichtung.

Für den rechtzeitigen Austausch der Gleitringdichtung oder von verschleißenden Komponenten der Gleitringdichtung ist es wichtig, den richtigen Zeitpunkt zuverlässig zu erfassen. Ein solcher Zeitpunkt kann durch Vorgabe von konstanten Inspektions- oder Tauschintervallen sichergestellt werden, das heißt nach einer bestimmten abgelaufenen Betriebszeit wird die Gleitringdichtung inspiziert und gegebenenfalls ausgetauscht oder es erfolgt grundsätzlich bereits ein Austausch. Die Festlegung solcher Intervalle muss dabei alle ungünstigen Randbedingungen des Einsatzfalles der Gleitringdichtung berücksichtigen, um den Zeitpunkt des notwendigen Austauschs nicht zu verpassen.

EP 0 886 088 B1 offenbart ein Diagnosesystem für eine Gleitringdichtung, mit welchem eine Ausfallwahrscheinlichkeit oder eine theoretische Restlebensdauer einer Gleitringdichtung bestimmt werden kann, um Risiken frühzeitig zu erkennen und bereits vor einem tatsächlich eingetretenen Verschleiß und besonders vor einer Funktionsuntüchtigkeit ein Signal bezüglich der Ausfallwahrscheinlichkeit und/oder der Restlebensdauer einer Gleitringdichtung zu generieren. Hierfür werden der Druck des Mediums und die Temperatur des Mediums sowie gegebenenfalls die Temperatur von Elementen der Gleitringdichtung, ein Leckagedruck oder die Feuchtigkeit auf der dem Medium abgewandten Seite der Gleitringdichtung gemessen. Die Messwerte werden mit bekannten Vergleichswerten verglichen und aus der Abweichung der gemessenen Werte von den bekannten Vergleichswerten wird die Ausfallwahrscheinlichkeit und/oder die verbleibende Restlebensdauer errechnet, wobei die Ausfallwahrscheinlichkeit erhöht beziehungsweise die Restlebensdauer stärker als die tatsächliche Betriebszeit verringert wird, wenn ein Messwert die Vergleichswerte überschreitet oder wenn ein Messwert sich den Vergleichswerten annähert. Die Restlebensdauer ergibt sich demnach aus einer Differenz einer ursprünglich vorgegebenen absoluten Lebensdauer, die von der Medienart, dem Druck, der Temperatur und anderen Größen abhängig sein kann, und der tatsächlichen Betriebszeit, das heißt der bereits verstrichenen Betriebszeit abzüglich eines weiteren Wertes in Abhängigkeit des Vergleichs der Messwerte mit den Vergleichswerten.

Bei dem bekannten Diagnosesystem wird somit versucht, über verschiedene Messwerte zu erfassen, ob eine Überbeanspruchung der Gleitringdichtung über das normale Maß hinaus stattgefunden hat, und falls dies der Fall ist, wird die übliche Lebensdauer um einen bestimmten Betrag reduziert. Dadurch ist es möglich, Gleitringdichtungen grundsätzlich erst nach Ablauf einer durchschnittlichen Lebensdauer zu inspizieren oder auszutauschen, wobei diese durchschnittliche Lebensdauer nicht anhand der ungünstigsten möglichen Randbedingungen festgelegt werden muss. Im Einzelfall, wenn ungünstige Randbedingungen auftreten, wird gleichzeitig vermieden, dass ein Austausch zu spät erfolgt, wenn bereits ein Schaden an der Gleitringdichtung eingetreten ist, der zu unerwünschten Dichtzuständen führt, weil bereits vorher ein entsprechendes Signal erzeugt wird.

Bei dem bekannten Diagnosesystem verbergen sich verschiedene Unsicherheiten in der Bewertung der Restlebensdauer. So muss beispielsweise abgeschätzt werden, wie gravierend die Änderung eines einzelnen Messwertes auf den Zustand der Gleitringdichtung ist. Kommen verschiedene ungünstige Randbedingungen zusammen, so muss eine kumulative Schadenswirkung geschätzt werden. Aus den geschätzten Schadenswirkungen müssen wiederum Verkürzungen der üblichen Lebensdauer geschätzt werden. All diese Schätzvorgänge sind mit Unsicherheiten behaftet, sodass im Zweifel eine vergleichsweise kurze Lebensdauer angenommen werden muss und trotzdem Schäden im Einzelfall aufgrund des Zusammentreffens bestimmter Randbedingungen nicht ausgeschlossen werden können.

Der vorliegenden Erfindung liegt daher die Aufgabe zugrunde, ein Verfahren zum Ermitteln der Restlebensdauer einer Gleitringdichtung anzugeben, das in der Praxis zuverlässig die Restlebensdauer in jedem Einzelfall exakter vorhersagt.

Die erfindungsgemäße Aufgabe wird durch ein Verfahren mit den Merkmalen von Anspruch 1 gelöst. In den abhängigen Ansprüchen werden vorteilhafte und besonders zweckmäßige Ausgestaltungen der Erfindung angegeben.

Ein erfindungsgemäßes Verfahren zum Ermitteln der Restlebensdauer einer Gleitringdichtung, wobei die Gleitringdichtung wenigstens einen Gleitring und einen Gegenring aufweist und der Gleitring und/oder der Gegenring um eine Drehachse relativ zum jeweils anderen Ring umläuft und der Gleitring zur Abdichtung eines Dichtspaltes elastisch vorgespannt am Gegenring anliegt, weist die folgenden Schritte auf:
- Festlegen (das heißt Vorgeben) eines maximal zulässigen Verschleißzustandes des Gleitringes und/oder des Gegenringes;
- Erfassen der abgelaufen Betriebszeit, das heißt jener Zeit, in welcher die Gleitringdichtung betrieben wird, angefangen von ihrer Erstinbetriebnahme oder einer erneuten Inbetriebnahme;
- Ermitteln eines Ist-Verschleißzustands des Gleitringes und/oder des Gegenringes mittels eines Verschleißsensors;
- Extrapolieren der Restlebensdauer aus der abgelaufenen Betriebszeit, dem Ist-Verschleißzustand und dem maximal zulässigen Verschleißzustand.

Gemäß der vorliegenden Erfindung wird somit erfasst, um wieviel der Gleitring und/oder der Gegenring innerhalb der bisherigen Betriebszeit bereits verschlissen ist, und hieraus kann dann unter Berücksichtigung des maximal zulässigen Verschleißes sozusagen eine Verschleißreserve bestimmt werden. Der Verschleißreserve ist wiederum eine Betriebszeit der Gleitringdichtung zugeordnet, wobei diese Zuordnung vom bisherigen Verschleißverlauf abhängig ist. Bei der der Verschleißreserve zugeordneten (zukünftigen) Betriebszeit handelt es sich um die Restlebensdauer. Der maximal zulässige Verschleißzustand kann bei der Erstinbetriebnahme oder einer erneuten Inbetriebnahme bestimmt und vorgegeben werden.

Mit dem erfindungsgemäßen Verfahren ist damit eine sehr exakte Bestimmung der Restlebensdauer möglich, weil aus der Erfahrung hinsichtlich der Verschleißentwicklung im konkreten Einzelfall, also aus der Vergangenheit auf die Zukunft im konkreten Einzelfall geschlossen wird.

Bevorzugt werden der maximal zulässige Verschleißzustand und der Ist-Verschleißzustand durch jeweils einen Zahlenwert beschrieben. Der maximal zulässige Verschleißzustand wird durch einen Maximal-Verschleißzustandswert beschrieben und der Ist-Verschleißzustand wird durch einen Ist-Verschleißzustandswert beschrieben. Die abgelaufene Betriebszeit kann dann durch den Ist-Verschleißzustandswert dividiert und mit dem Maximal-Verschleißzustandswert multipliziert werden und das Ergebnis dieser Division und Multiplikation kann zur Extrapolation der Restlebensdauer herangezogen werden.

Wenn beispielsweise nach 5000 Betriebsstunden ein Verschleiß von 20 Prozent erfasst wird, so kann durch diese Division und Multiplikation bei einer linearen Extrapolation bestimmt werden, dass 100 Prozent Verschleiß nach 25 000 Betriebsstunden vorliegen.

Bevorzugt wird die abgelaufene Betriebszeit jedoch zur Berechnung des Ergebnisses, das zur Extrapolation der Restlebensdauer herangezogen wird, zusätzlich mit einem Beanspruchungsfaktor multipliziert und/oder es wird anderweitig zusätzlich eine Beanspruchungsgröße bei der Extrapolation berücksichtigt, beispielsweise indem die Beanspruchungsgröße auf das Ergebnis der Multiplikation und Division aufaddiert wird. Der Beanspruchungsfaktor und/oder die Beanspruchungsgröße kann/können in Abhängigkeit von erfassten Messwerten im Bereich der Gleitringdichtung und/oder eines mit der Gleitringdichtung abzudichtenden Mediums und/oder in Abhängigkeit von eingegebenen Vorgabewerten bestimmt werden. Beispielsweise wird eine Durchschnittsdrehzahl und/oder Maximaldrehzahl des Gleitringes und/oder des Gegenringes während der Betriebszeit erfasst und/oder es wird eine Nenndrehzahl als Vorgabewert vorgegeben und die Bestimmung des Beanspruchungsfaktors und/oder der Beanspruchungsgröße erfolgt in Abhängigkeit der erfassten Durchschnittsdrehzahl und/oder Maximaldrehzahl und/oder in Abhängigkeit der Vorgabe der Nenndrehzahl.

Gemäß einer Ausführungsform der Erfindung wird eine Temperatur des Gleitringes, des Gegenringes, einer Umgebung der Gleitringdichtung und/oder eines mit der Gleitringdichtung abgedichteten Mediums während der Betriebszeit erfasst und/oder als Vorgabewert vorgegeben und die Bestimmung des Beanspruchungsfaktors und/oder der Beanspruchungsgröße erfolgt in Abhängigkeit dieser Erfassung und/oder dieses Vorgabewertes beziehungsweise dieser Vorgabewerte.

Da sich auch das Medium, das mit der Gleitringdichtung abgedichtet werden soll, auf die Lebensdauer der Gleitringdichtung auswirken kann, einerseits durch eine mehr oder minder starke Beanspruchung der Gleitringdichtung in Abhängigkeit des Mediums und andererseits bezüglich einer Zulässigkeit eines mehr oder minder großen Leckagestromes, wird gemäß einer besonders bevorzugten Ausführungsform der Erfindung ein Aggregatzustand und/oder eine Zusammensetzung des mit der Gleitringdichtung abgedichteten Mediums bei der Bestimmung des Beanspruchungsfaktors und/oder der Beanspruchungsgröße berücksichtigt. Prinzipiell kann ein solcher Aggregatzustand und/oder eine solche Zusammensetzung mittels eines Sensors erfasst werden und/oder als Vorgabewert vorgegeben werden.

Gemäß einer Ausführungsform der Erfindung wird ein Druck im mit der Gleitringdichtung abgedichteten Medium während der Betriebszeit erfasst oder als Vorgabewert vorgegeben, und die Bestimmung des Beanspruchungsfaktors und/oder der Beanspruchungsgröße erfolgt in Abhängigkeit von dieser Erfassung und/oder Vorgabe.

Aufgrund dessen, dass der Gleitring elastisch vorgespannt am Gegenring anliegt, sollte mit zunehmendem Verschleiß des Gleitringes und/oder des Gegenringes wenigstens einer der beiden Ringe auf den entsprechend anderen zu bewegt werden. Damit ist der Ist-Verschleißzustand über die Position des wenigstens einen beweglichen Ringes bestimmbar. Bevorzugt erfasst daher der Verschleißsensor eine Position des Gleitringes und/oder des Gegenringes auf der Drehachse, das heißt in einer Axialrichtung, die in Richtung der Drehachse verläuft, und/oder eine Bewegung des Gleitringes und/oder des Gegenringes in Richtung der Drehachse wird mit dem Verschleißsensor erfasst. Der Ist-Verschleißzustand kann dann in Abhängigkeit dieser Positions- oder Bewegungserfassung ermittelt werden.

Bevorzugt wird bei der Inbetriebnahme der Gleitringdichtung ein Ausgangszustand, insbesondere die Position, das heißt Ausgangsposition, des Gleitringes und/oder Gegenringes auf der Drehachse erfasst und in einem Speicher zum späteren Abruf und/oder zur numerischen und/oder grafischen Darstellung gespeichert. Der Ausgangszustand entspricht dann insbesondere einem Verschleißzustand von Null. Der maximal zulässige Verschleißzustand, insbesondere die maximal zulässige Bewegung des Gleitringes und/oder des Gegenringes in Richtung der Drehachse, kann dann in Abhängigkeit dieser Ausgangsposition festgelegt werden.

Gemäß einer Ausführungsform der Erfindung werden zur Erzeugung einer Historie die erfassten Messwerte und/oder die erfassten Positionen des Gleitringes und/oder des Gegenringes zusammen mit einem zugehörigen Wert der Betriebszeit fortlaufend oder in Intervallen in einem Speicher zum späteren Abruf und/oder zur numerischen und/oder grafischen Darstellung gespeichert.

Der Ausgangszustand und die Historie sowie die bestimmte Restlebensdauer können dann zum Beispiel auf Abruf oder permanent grafisch dargestellt werden, insbesondere mittels eines Computerprogrammes und/oder einer App auf einem mobilen Endgerät. Damit ist rasch überschaubar, in welchem Zustand sich die Gleitringdichtung befindet und wann eine Reparatur oder ein Ersatz der Gleitringdichtung geplant werden sollte.

Das erfindungsgemäße Verfahren soll nachfolgend anhand eines Ausführungsbeispiels einer Gleitringdichtung und den Figuren exemplarisch erläutert werden.

Es zeigen:
- Figur 1: eine dreidimensionale Draufsicht auf eine Gleitringdichtung;
- Figur 2: einen Axialschnitt durch die Gleitringdichtung aus der Figur 1;
- Figur 3: eine schematische Darstellung mit Details eines erfindungsgemäßen Verfahrens.

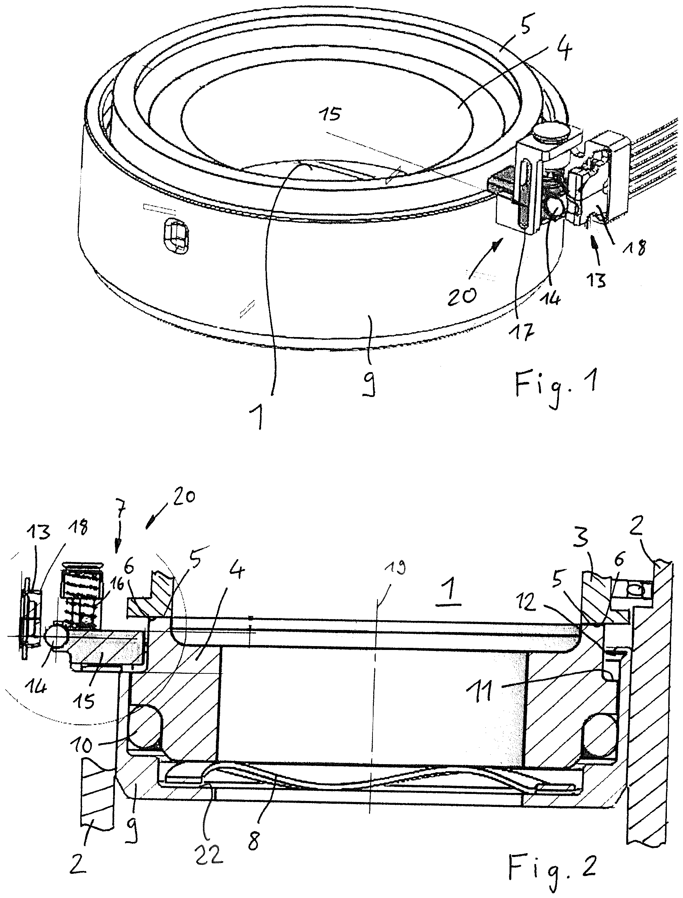

In der Figur 1 ist ein Ausführungsbeispiel einer Gleitringdichtung zur Abdichtung einer Drehdurchführung gezeigt, bei welcher das erfindungsgemäße Verfahren zum Ermitteln der Restlebensdauer anwendbar ist, mit einem Kanal 1, der ein Fluid aus einem stationären Bauteil in ein rotierendes Bauteil führt. Das stationäre Bauteil ist beispielsweise in der Figur 2 schematisch angedeutet und mit 2 beziffert und das rotierende Bauteil ist ebenfalls in der Figur 2 schematisch angedeutet und mit 3 beziffert.

Wie aus den Figuren 1 und 2 ersichtlich ist, weist die Gleitringdichtung einen Gleitring 4 auf, der an einer axialen Stirnseite eine Dichtfläche 5 aufweist, wobei sich die Dichtfläche 5 an einer Gegenfläche 6 des rotierenden Bauteils 3 abstützt, um den Kanal 1 gegenüber der Umgebung beziehungsweise einer Leckageseite 7 abzudichten.

Der Gleitring 4 ist im Bereich seiner Dichtfläche 5 und/oder das rotierende Bauteil 3 ist im Bereich der Gegenfläche 6 aus einem verschleißenden Werkstoff hergestellt, wobei der Verschleiß durch Abrieb des Werkstoffes bei der Relativdrehung zwischen dem Gleitring 4 beziehungsweise der Dichtfläche 5 und der Gegenfläche 6 erfolgt. Um trotzdem die gewünschte Abdichtung im Bereich der Dichtfläche 5 beziehungsweise Gegenfläche 6 zu erzielen, ist der Gleitring 4 an seinem der Dichtfläche 5 abgewandten axialen Ende mittels eines Federelementes, hier einer Druckfeder oder Wellfeder 8, elastisch in einem Gehäuse 9 abgestützt. Wie man aus der Figur 2 entnehmen kann, erfolgt die Abstützung mittels der Druckfeder oder Wellfeder beispielsweise an einem Gehäuseboden 22 des Gehäuses 9.

Der Kanal 1 verläuft in Axialrichtung durch das Gehäuse 9 und den Gleitring 4 und bevorzugt auch durch die Wellfeder 8. Zur Abdichtung ist ein O-Ring 10 zwischen dem Gleitring 4 und dem Gehäuse 9 vorgesehen.

Der Gleitring 4 weist eine Schulter oder Anschlagfläche 11 auf, die bei einer ausfahrenden Bewegung des Gleitringes 4 in Axialrichtung aus dem Gehäuse 9 an einem radial nach innen gerichteten Vorsprung 12 des Gehäuses 9 anschlägt, um ein weiteres Ausfahren des Gleitringes 4 aus dem Gehäuse 9 zu verhindern. Am Gehäuse 9 ist ein stationärer Sensor 13 angeschlossen, der radial außerhalb zu einem Magneten 14 positioniert ist und als Hall-Sensor ausgeführt ist, der eine axiale Position des Magneten 14 und damit des Gleitringes 4 erfasst. Der Magnet 14 ist insbesondere unmittelbar am Gleitring 4 angeschlossen oder über ein Zwischenbauteil 15, das sich in der Axialrichtung gemeinsam mit dem Gleitring 4 bewegt und den Magneten 14 trägt, siehe die Figur 2.

Bevorzugt stützt sich der Magnet 14 oder das Zwischenbauteil 15 in Axialrichtung an der Anschlagfläche 11 ab.

Im in den Figuren 1 und 2 gezeigten Ausführungsbeispiel ist das Zwischenbauteil 15 mittels eines Federelementes 16 elastisch gegen die Anschlagfläche 11 abgestützt. Alternativ käme auch ein starrer Anschluss des Zwischenbauteils 15 am Gleitring 4 in Betracht.

Der Verschleißsensor 13 weist ein Sensorgehäuse 18 auf, in welches weitere Sensoren, beispielsweise ein Temperatursensor, integriert sein können. Das Zwischenbauteil 15 wird verschiebbar in einer Gleitschiene 17 gehalten, die am Gehäuse 9 angeschlossen ist.

Der stationäre Sensor 13 bildet zusammen mit dem Magneten 14 einen Positionssensor zur Erfassung der Position des Gleitringes 4 in der Axialrichtung, das heißt in Richtung der Drehachse 19 des rotierenden Bauteils 3. Der Positionssensor dient erfindungsgemäß als Verschleißsensor 20, welcher den Ist-Verschleißzustand des Gleitringes 4 erfasst. Bei einem in Richtung der Drehachse 19 beweglichen rotierenden Bauteil 3 könnte ein entsprechender Verschleißsensor die Position des rotierenden Bauteils 3 erfassen.

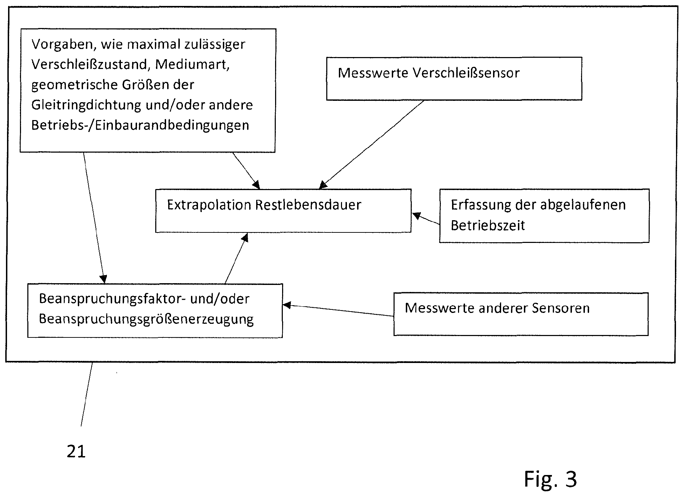

Wie in der Figur 3 schematisch dargestellt ist, werden die Messwerte des Verschleißsensors, demnach der Ist-Verschleißzustand des Gleitringes 4 sowie Vorgaben, wie ein zunächst vorgegebener maximal zulässiger Verschleißzustand und beispielsweise die Art des abzudichtenden Mediums in dem Kanal 1, geometrische Größen der Gleitringdichtung, beispielsweise des mittleren Durchmessers der Dichtfläche 5, und/oder andere Betriebs- und/oder Einbaurandbedingungen, zur Extrapolation einer Restlebensdauer der Gleitringdichtung herangezogen. Dabei können Vorgaben und insbesondere Messwerte anderer Sensoren verwendet werden, um einen Beanspruchungsfaktor und/oder eine Beanspruchungsgröße zu erzeugen, die in die Extrapolation der Restlebensdauer einfließt. Der Beanspruchungsfaktor und/oder die Beanspruchungsgröße ist insbesondere abhängig von der Drehzahl des rotierenden Bauteils 3, wobei die Drehzahl wiederum als Vorgabe eingegeben werden kann oder während des Betriebs erfasst werden kann.

In die Extrapolation der Restlebensdauer geht ferner die bereits abgelaufene Betriebszeit ein, die entsprechend erfasst wird. Aus der Paarung der abgelaufenen Betriebszeit und des mittels des Verschleißsensors festgestellten Verschleißes kann in Kenntnis eines maximal zulässigen Verschleißzustandes sicher auf die Restlebensdauer geschlossen werden.

Das erfindungsgemäße Verfahren kann beispielsweise mittels einer Steuervorrichtung 21 ausgeführt werden, die entsprechend wenigstens einen Prozessor und wenigstens einen Speicher aufweist, in welchem ein Computerprogramm zur Ausführung des Verfahrens hinterlegt ist. Die Steuervorrichtung 21, die im Bereich der Gleitringdichtung oder auch entfernt von dieser vorgesehen sein kann, kommuniziert insbesondere mit einem mobilen Endgerät, um die Vorgaben in die Steuervorrichtung einzugeben und dort zu speichern und um die Restlebensdauer sowie gegebenenfalls andere Vorgabe- und/oder Messwerte auf dem mobilen Endgerät darzustellen.

### Bezugszeichenliste

- 1: Kanal
- 2: stationäres Bauteil
- 3: rotierendes Bauteil
- 4: Gleitring
- 5: Dichtfläche
- 6: Gegenfläche
- 7: Leckageseite
- 8: Wellfeder
- 9: Gehäuse
- 10: O-Ring
- 11: Anschlagfläche
- 12: Vorsprung
- 13: stationärer Sensor
- 14: Magnet
- 15: Zwischenbauteil
- 16: Federelement
- 17: Gleitschiene
- 18: Sensorgehäuse
- 19: Drehachse
- 20: Verschleißsensor
- 21: Steuervorrichtung
- 22: Gehäuseboden

## Patentansprüche

1. Verfahren zum Ermitteln der Restlebensdauer einer Gleitringdichtung mit einem Gleitring (4) und einem Gegenring, wobei der Gleitring (4) und/oder der Gegenring um eine Drehachse (19) relativ zum jeweils anderen Ring umläuft und der Gleitring (4) zur Abdichtung eines Dichtspaltes elastisch vorgespannt am Gegenring anliegt, mit den folgenden Schritten:
1.1 Festlegen eines maximal zulässigen Verschleißzustandes des Gleitringes (4) und/oder des Gegenringes;
1.2 Erfassen der abgelaufenen Betriebszeit;
1.3 Ermitteln eines Ist-Verschleißzustands des Gleitringes (4) und/oder des Gegenringes mittels eines Verschleißsensors (20);
1.4 Extrapolieren der Restlebensdauer aus der abgelaufenen Betriebszeit, dem Ist-Verschleißzustand und dem maximal zulässigen Verschleißzustand.

2. Verfahren gemäß Anspruch 1, **dadurch gekennzeichnet, dass** der maximal zulässige Verschleißzustand und der Ist-Verschleißzustand durch jeweils einen Zahlenwert, nämlich Maximal-Verschleißzustandswert und Ist-Verschleißzustandswert, beschrieben werden und die abgelaufene Betriebszeit durch den Ist-Verschleißzustandswert dividiert und mit dem Maximal-Verschleißzustandswert multipliziert wird und das Ergebnis zur Extrapolation der Restlebensdauer herangezogen wird.

3. Verfahren gemäß Anspruch 2, **dadurch gekennzeichnet, dass** die abgelaufene Betriebszeit zur Berechnung des Ergebnisses zusätzlich mit einem Beanspruchungsfaktor multipliziert wird und/oder eine Beanspruchungsgröße bei der Extrapolation berücksichtigt wird, wobei der Beanspruchungsfaktor in Abhängigkeit von erfassten Messwerten im Bereich der Gleitringdichtung und/oder eines mit der Gleitringdichtung abzudichtenden Mediums und/oder in Abhängigkeit von eingegebenen Vorgabewerten bestimmt wird.

4. Verfahren gemäß Anspruch 3, **dadurch gekennzeichnet, dass** eine Durchschnittsdrehzahl und/oder Maximaldrehzahl des Gleitringes (4) und/oder des Gegenringes während der Betriebszeit erfasst wird und/oder eine Nenndrehzahl als Vorgabewert vorgegeben wird und die Bestimmung des Beanspruchungsfaktors und/oder der Beanspruchungsgröße in Abhängigkeit hiervon erfolgt.

5. Verfahren gemäß einem der Ansprüche 3 oder 4, **dadurch gekennzeichnet, dass** eine Temperatur des Gleitringes, des Gegenringes, einer Umgebung der Gleitringdichtung und/oder eines mit der Gleitringdichtung abgedichteten Mediums während der Betriebszeit erfasst wird und/oder als Vorgabewert vorgegeben wird und die Bestimmung des Beanspruchungsfaktors und/oder der Beanspruchungsgröße in Abhängigkeit hiervon erfolgt.

6. Verfahren gemäß einem der Ansprüche 3 bis 5, **dadurch gekennzeichnet, dass** eine Aggregatzustand und/oder eine Zusammensetzung eines mit der Gleitringdichtung abgedichteten Mediums bei der Bestimmung des Beanspruchungsfaktors und/oder der Beanspruchungsgröße berücksichtigt wird.

7. Verfahren gemäß einem der Ansprüche 3 bis 6, **dadurch gekennzeichnet, dass** ein Druck im mit der Gleitringdichtung abgedichteten Medium während der Betriebszeit erfasst wird oder als Vorgabewert eingegeben wird und die Bestimmung des Beanspruchungsfaktors und/oder der Beanspruchungsgröße in Abhängigkeit hiervon erfolgt.

8. Verfahren gemäß einem Ansprüche 1 bis 7, **dadurch gekennzeichnet, dass** der Verschleißsensor (20) eine Position und/oder Bewegung des Gleitringes (4) und/oder des Gegenringes in Richtung der Drehachse (20) erfasst und der Ist-Verschleißzustand in Abhängigkeit dieser Erfassung ermittelt wird.

9. Verfahren gemäß einem der Ansprüche 1 bis 8, **dadurch gekennzeichnet, dass** bei der Inbetriebnahme der Gleitringdichtung ein Ausgangszustand insbesondere der Position des Gleitringes (4) und/oder des Gegenringes auf der Drehachse (19) erfasst und in einem Speicher zum späteren Abruf und/oder zur numerischen und/oder grafischen Darstellung gespeichert wird.

10. Verfahren gemäß einem der Ansprüche 3 bis 9, **dadurch gekennzeichnet, dass** zur Erzeugung einer Historie die erfassten Messwerte und/oder die erfasste Position zusammen mit einem zugehörigen Wert der Betriebszeit fortlaufend oder intermittierend in einem Speicher zum späteren Abruf und/oder zur numerischen und/oder grafischen Darstellung gespeichert wird.

11. Verfahren gemäß der Ansprüche 9 und 10, **dadurch gekennzeichnet, dass** der Ausgangszustand, die Historie und die bestimmte Restlebensdauer auf Abruf oder permanent grafisch dargestellt werden, insbesondere mittels eines Computerprogrammes oder einer App auf einem mobilen Endgerät.
